# EUROPEAN PATENT APPLICATION

(11) **EP 0 963 077 A2**
(43) Date of publication of application: **08.12.1999**
(21) Application number: 99304259.7
(22) Date of filing: 01.06.1999
(51) Int. Cl.: H04L 12/24

(54) **Node and link representation of network services**

(30) Priority: 04.06.1998 US 90393
(71) Applicant: NORTEL NETWORKS CORPORATION, Montreal, Quebec H2Y 3Y4 (CA)
(72) Inventor: Hyndman, Arn Close, Ottawa, Ontario K2P 0G8 (CA)
(74) Representative: Berkson, Michael David

(57) **Abstract**

A layered architecture for a network management system comprises physical building blocks (BBs) and service BBs. The purpose of a physical BB is to convert physical network information from the network resources and faults information into specific physical network data. The purpose of a service BB is to convert the physical network data from other physical BBs service related information and to present it to its clients using the same interface that the associated physical BB uses. A physical BB and a service BB form a family if they use same type of physical network data. All BBs in the network management system reuse parts of the software. Namely a BB has specific software parts, BB family software parts, and network management software parts that are common to all BB. Service BBs may interact to each-other in a serverclient relationship.

## Description

### BACKGROUND OF THE INVENTION

### Field of the Invention

This invention is directed to a network management system and in particular to a network management system provided with node and link representation of network services.

### Background Art

With the emerging broadband applications such as LAN extension over ATM, video trunking, video on demand, distance learning, legacy operations support systems (OSSs) simply cannot provide the level of functionality required. In addition, they often cannot be evolved due to inherent technology base (main frame based, centralized architecture). Integrated network management which offers extensive, in-depth monitoring and control of the multi-vendor products across the entire broadband network, became essential.

Many network operators now face the challenge of having to manage hundreds of network elements (NEs) on a nodal basis. These network elements are becoming more and more sophisticated both in configuration and their output information. With the telecommunication market becoming increasingly competitive and filed with new entrants who can react much more quickly, many large network operators are implementing an overlay network management infrastructure for broadband networks rather than evolving legacy OSSs. The new management infrastructure needs to be flexible in accommodating different technologies and vendors, reconfigurable as network layout changes, scaleable as network expands and uniform in the way NEs are managed regardless of interface protocols. The ultimate goals are to enable fast and efficient service order turn-around and be more cost effective in order to offer the most competitive prices in the market place.

Open platforms are ready available from all major computing vendors such as HP, DEC, IBM, SUN, and some small specialized software companies, e.g. OSI. For the enterprise networks, these platforms have already gained significant penetration as the basis for building customized enterprise network management solutions. In the telecommunication market, they are also gaining momentum, many vendors announcing network management products to run on open platforms, such as Fujitsu's FlexR Plus™ and Alcatel's 1320™.

An important aspect of a network management system is the way in which information is presented to the user. There exist network management products which typically run on a PC or UNIX work-station which are used to manage computer or telecommunication networks. Some of these products provide graphical interfaces to users. Current graphical user interfaces (GUI) utilize model-based intelligence to represent diverse network dimensions by providing multiple views of the network, such as NE location, topology, status, faults and performance.

US Patent No. 5,394,522 (Sanchez-Frank et al.) issued on February 28, 1995 and assigned to IBM Corporation, discloses a program architecture and a method for graphically defining a network and for deriving configuration parameters for the node terminals of the network. The network administrator can define protocols for the communication paths between the network work-stations. Based upon such network of work-stations and communication paths, constrains can thereafter generate configuration parameters for the operating systems of the respective work-stations. The configuration manager can also switch the modes of operation defined for the network, and redefine the nodes and the paths characteristics for the combined modes of operation. The network parameters can be stored, recalled, redefined and retransmitted by graphical manipulation.

US Patent No. 5,375,199 (Harrow et al.) issued on December 20, 1994 and assigned to Digital Equipment Corporation discloses a system monitoring device which displays historical and real time information for a computer network and allows a user to interactively manipulate the information being displayed.

US Patent Application SN 08/764086 (Planas et al.) filed on December 6, 1996 and assigned to Northern Telecom Limited, discloses a GUI able to present a large number of NEs to the user and the tools used to perform maintenance, surveillance, and administration of the network. Tasks performed include alarm monitoring, test and diagnosis of faults, performance monitoring, connection management, accounting, and security operations.

The intent of the network management tools is to provide a centralized view of the network enabling correlation of events and conditions that span the network elements and subnetworks, as well as to facilitate the management of a non-homogenous collection of telecommunication devices.

However, these patents are concerned with physical representation of the network nodes and of the physical paths between these nodes. Physical nodes in a network typically represent the hardware that sits at the end points of physical links, which typically represent the cables that carry data from one point to the next.

Services often need to be managed along side the physical hardware in the network, but such representations typically require an entirely different treatment, which results in large development efforts. It is also desirable to show how leased services connect to owned hardware on a single display, which again requires considerable development effort.

One solution is to manage services in a separate user interface area from physical network hardware. However, this is close to twice as much work as developing just the physical network management user interface, and does not allow the user to view services in context with the physical network hardware.

Another solution is to allow services to be overlaid on the physical network display. This solution is useful for showing what hardware a service uses, but is not great for displaying interactions between leased services and owned network hardware.

The overlay solution may entirely breakdown in scenarios where the user is not allowed to see the hardware on which the service runs. Nonetheless, the solution is, again, expensive to develop.

There is a need for providing a network manager with means for showing and controlling not only the equipment that forms a physical network, but also the services and service links, with very little incremental cost over showing and controlling just one or other type.

### SUMMARY OF THE INVENTION

It is an object of the present invention to provide a node and link representation of network services for a communication network, and to re-use existing resource based machine interfaces to reduce development cost.

It is another object of this invention to provide a way of conveying status information corresponding to services in the same way it is provided to physical resources.

According to the invention there is provided a network management system for enabling control and monitoring of a plurality of physical resources forming a communication network, comprising a building block (BB) family including, a building block (BB) specialized in collecting and processing resource information from the physical resources and generating specific physical data, a service BB (SBB) for receiving the specific physical data and converting same into specific service data, and a service and network management user interface shared by the BB family, for receiving the specific physical data from the BB and the specific service data form the SBB, and converting same into service and physical user data for presentation to a graphical user interface in a single view.

There is further provided a network management system for enabling control and monitoring of a plurality of physical resources forming a communication network, comprising a trail management building block (TMBB), specialized in collecting and processing information regarding connectivity between a plurality of physical nodes of the network and generating physical trail data, a service resource management BB (SRMBB), for receiving the physical trail data and generating service resource data regarding a plurality of service nodes of the network and connectivity of services between the service nodes.

Network manager system further comprises a service fault management BB (SFMBB) for receiving said physical fault data and said service and said service resource data and generating service fault data.

Advantageously, similar graphical presentation of services and physical entities avoids having to make large distinctions between the service and physical network hardware. Reducing this distinction makes it easy to provide user interfaces that can manage both the physical network and the services.

Representing services and physical nodes in the same way allows design of such user interfaces (that display both types of resources on the same display) with very little incremental cost over showing just one or other type. It also makes it possible to show end-to-end data transport where some portion of the transport goes over leased services and the reminder over owned network hardware. This is a key feature for some customer network management products.

### BRIEF DESCRIPTION OF THE DRAWINGS

The foregoing and other objects, features and advantages of the invention will be apparent from the following more particular description of the preferred embodiments, as illustrated in the appended drawings, where:
**Figure 1A** is a block diagram of a network management product, illustrating the service building blocks according to this invention;
**Figure 1B** is a network manager main screen, showing physical and service nodes and links;
**Figure 1C** is the network manager screen of Figure 1B also showing faults;
**Figure 2** shows the logical layered architecture of the network management architecture of Figure 1A;
**Figure 3** shown software reuse in the service BBs;
**Figure 4** shows service building blocks and system users;
**Figure 5** is a functional block diagram of the service resource management building block (SRMBB); and
**Figure 6** is a functional block diagram of the service fault management building block (SFMBB).

### DESCRIPTION OF THE PREFERRED EMBODIMENT

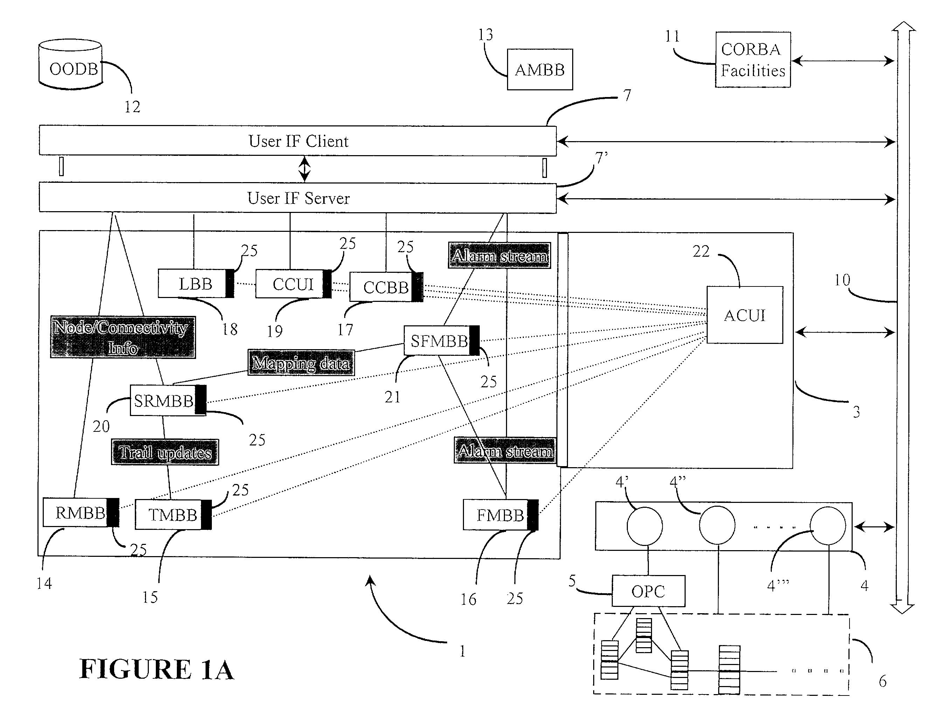

A block diagram of a network management product 1, illustrating the service building blocks according to this invention is shown in Figure 1A. It is to be understood that the invention applies to other distributed network management architectures, and the architecture of Figure 1A is described by way of example only, for showing connection and operation of service BBs.

Network manager **1** is based on common object request broker architecture (CORBA) technology, and comprises three components: a graphical user interface (GUI) **2**, application building blocks (BB) **3** and element controllers, which could be managed object agents (MOA) **4** or operation controllers (OPC) **5**.

The grey blocks illustrate the type of data flowing between the respective processes. The Alarm Stream comprises data in the form of alarm raise, acknowledge, and clear events. The Node/Connectivity Information includes resource data consisting of node discovery and connectivity events. Services are represented as pairs of connected service nodes.

Trails data comprises trail creation and modification events data, including details about physical ports and facilities. Mapping Data illustrates physical to service mapping data consisting of mapping between physical port and facility to service identifiers.

Figure 1A also shows a service and network management user interface, which is actually comprised of a user interface client (UIC) **7**, and an user interface server (UIS) **7'**, each performing the function indicated by their respective name.

This division into client and server parts allows a dramatic reduction in the size of the UIC component which runs on the user's machine. UIC **7** manages only enough data to refresh the current display to prevent excessive messaging. UIC **7** caches state information only as necessary to achieve the performance demanded for user interactions. UIS **7'** is responsible for storing the state of the user interface as a whole, for marshalling data, and for interacting with other BBs.

User interface **7** employs facilities provided by the building blocks **3**, as it is capable of displaying information at both levels of abstraction, i.e. both physical node/link and abstracted service node/link.

MOAs **4** are network element management software entities that consolidate and adapt information from the network under their control. MOAs **4** are provided to support multi-vendor multi-technology NEs. MOAs **4** manage network **6**, or subnetworks, network elements (NE), links, and shelf based equipment. For example MOA **4'** supports SONET NEs, MOA b supports ATM NEs, and MOA **4"'** communicates with the managed network using other proprietary protocols. MOAs **4** are CORBA-based, which facilitates development by third parties of compatible MOAs.

The object request broker interface, intuitively shown at **10**, is used as a distributed computing infrastructure to create applications that readily interact within CORBA (Common Object Request Broker Architecture) environment, with minimal technology dependencies. CORBA interfaces are used where communicating components may be written in different languages. These are also required where the interface is public or may become public in the future. Keyed CORBA is used for private interfaces between administration user interfaces and the components they are affecting. In a keyed interface, authentication information is hard coded so that an administration Ul can only talk to a specific instance(s) of the keyed interface.

Block **11** shows generically services that may be provided by CORBA, such as event, life cycle, transaction, concurrency control, security services, etc.

Network manager **1** is also provided with an access control user interface (ACUI) **22**, which allows the administrator of the network to limit what users can see and can do. As shown in Figure 1A, each BB is responsible for managing the access control related to the resources and functions it provides. This is illustrated by a generalized control interface **25** shown in black at the respective access controlled BB. The interconnections between ACUI **22** and the BBs are shown in dotted lines.

Network manager **1** uses a distributed database, where information used by a BB is stored at the respective BB, so that it can make use to obtain an accurate, up-to-date view of access control for all resources it controls. An object-oriented database **12** is used for persistent storage of network level objects which cannot be derived or stored in the network.

Finally, an application management BB (AMBB) **13** manages applications and the platforms on which they run. AMBB **13** comprises four types of management disciplines: availability, deployment, application management and security management.

The application BBs **3** are software components providing functionality to the GUI through open, standards-based CORBA interface **10**. The building blocks are location independent and use a logical address so that it does not matter which host each BB uses. However, UIS **7'** must run on the same host computer as the providers web server for security reasons, while UIC **7** runs within a web browser on any computer with access to the web server.

The BBs of the network manager 1 include physical BBs, such as for example resource management BB (RMBB) **14**, trail management BB **15**, fault management BB (FMBB) **16**, custom command BB (CCBB) **17**, layout BB (LBB) **18**, and custom command user interface (CCUI) **19**. Network manager 1 also includes service BBs, such as a service resource management BB (SRMBB) **20** and a service fault management BB (SFMBB) **21**. Client designed BBs (not shown) could also be added to the network manager for a specific application.

Table 1 below gives the name and responsibility of components shown in Figure 1A.

**Table 1**

| High level components of network manager of Figure 1A | | | |
|---|---|---|---|
| Name | **#** | Function | Tech |
| **CCUI** Custom Command Ul | **19** | User configuration of custom commands | Java |
| **UIC** Service & Network Management Ul Client | **7** | Presentation of network data and general interaction with the user | Java |
| **ACUI** Access Control Ul | **22** | User configuration of access control | Java C++ |
| **AMBB** Appl Management BB | **13** | BB configuration | C++ |
| **CCBB** Custom Command BB | **17** | Custom command management | Java |
| **UIS** Service & Network Management Ul Server | **7'** | Ul state storage and logic to support UIC | Java |
| **LBB** Layout BB | **18** | Management of network resource & layout information | Java |
| **SRMBB** Service Resource Management BB | **20** | Service resource management | C++ |
| **SFMBB** Service Fault Management BB | **21** | Service fault management | C++ |
| **RMBB** Resource Mgmt BB | **14** | Resource management | C++ |
| **TMBB** Trail Management BB | **15** | Trail management | C++ |
| **FMBB** Fault Management BB | **16** | Fault management | C++ |

The service building blocks are added to the network management system according to the invention, for converting the physical network information from other BBs into service related information and then presenting it to clients using the same interface as the associated physical BB uses.

An end-to-end STS-3c trail is an example of a SONET service. This service can be shown by the GUI as two service nodes, representing the end points of the STS-3c, and a link, representing the network between the end points.

Service elements are service nodes that represent end points of a service. A service node in this specification is a representation of the end point of a service and has corresponding service links. The end point of a service may fall at a particular physical node and so there is often a direct mapping from a service node to a physical node. Service nodes are represented by a small or large triangular icon as shown at **a**. The physical nodes are represented by squares, as shown at **b**.

Figure 1B shows a sample of a network manager screen with physical nodes, service nodes and links. The network is comprised by network objects advertized by the physical resource and service resource management BBs.

Both physical and service links can be broken or suffer degradation-this parallel functionality with the physical nodes and links allows use of a similar representation for the physical and service links and nodes, which is particularly useful.

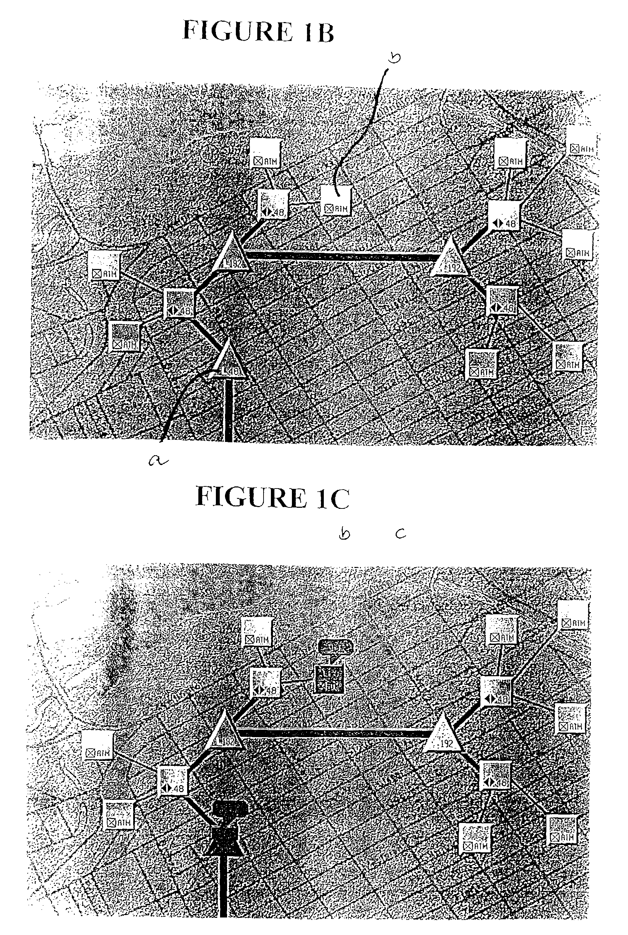

Figure 1C illustrates the network of Figure 1B with faults signalled at service node **a** and physical node **b**. Faults are indicated by a change in colour of the respective node or link, and by alarm balloons in both physical and service nodes, as shown at **c**.

However, these are exemplary graphical representations only, other graphical representations of these objects are also possible, the invention is not limited to the icons shown in Figures 1B-1C.

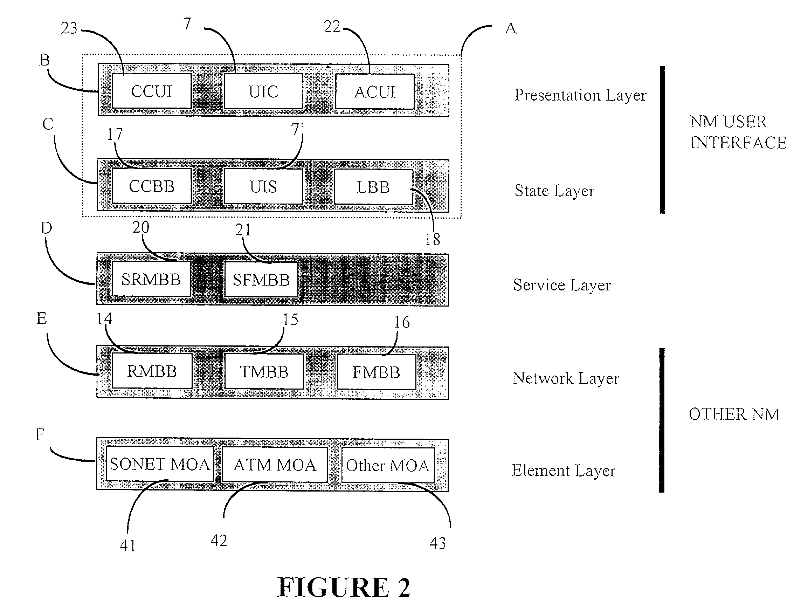

Figure 2 shows a layered view of the network management architecture, also illustrating the service BBs according to this invention. This architecture is based on the telecommunications management network (TMN) layered model of network management, including a user interface **A**, a service layer **D**, a network layer **E**, and an element layer **F**.

The user interface **A** is decomposed into two layers, a state layer **C** maintains state information and comprises a collection of client BBs which interact with the server BBs of the network manager. Presentation layer **B** uses the services of the state layer and is responsible for presentation of data and direct user interaction.

Service BBs **20** and **21** are shown in service layer **D**.

While the service oriented BBs described herein are the service resource management BB **20** (SRMBB) and the service fault management building block **21** (SFMBB), it is to be understood that other service-oriented BBs that are not describe here may be envisaged to address other particular service objects of the network.

A BB family is defined herein as a group of BBs that support the same interface. BBs of a family are identified by a common client interface, or at least very close. Thus, RMBB **14** and SRMBB **20** belong to the same family, and FMBB **16** and SFMBB **21** belong to the same family.

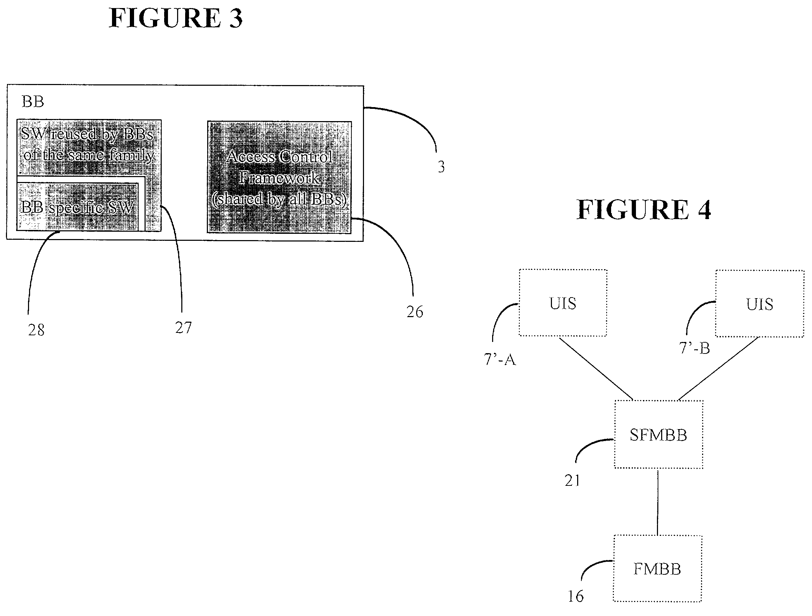

While all BBs share software, it is a fundamental goal of the design that BBs of the same family share a significant amount of SW. This is illustrated in Figure 3.

The software reused by all BBs of the network manager is denoted with reference numeral **26**, and may include the event framework, access control observers, and standard object translations.

The software reused by members of the same BB family is denoted with reference numeral **27** and may include CORBA IDL (interface definition language), stubs, event object, request object, data cache and filter implementations.

Reference numeral **28** shows the BB specific software. In the SRMBB for example, this includes communications code for trail data and trail-to-service translation code. In the SFMBB this BB-specific software includes communications code for trail and fault data, service status determination, and physical-to-service fault translation code.

When UIS **7'** connects to a service BB, the connection is identified as belonging to a user, to ensure that the BB only gives information that those users have access to. However, in most cases, the information that a user has access to from the physical layer will not be sufficient to generate information the user has access to in the service layer. In order to derive the information for the service BB correctly, it needs access to all physical information.

To achieve this, each of the SRMBB and SFMBB connect to physical BBs using a different user identification. This user is called a system user. Figure 4 shows SFMBB **21** and its system user. Users A and B have access to SFMBB **21** through interface **7'**, and SFMBB **21** is a system user for communication with FMBB **16**.

Resource management encompasses functionality required to retrieve and control network resources. This includes the network elements which comprise a network and the equipment that comprises a network element.

The RMBB is a processing layer BB providing open, standard-based CORBA IDL interfaces. RMBB is partitioned into multiple separate components with each component providing services for a unique functional area. Functional area supported are NE discovery/query, equipment inventory, and termination provisioning. This partitioning allows for the addition of new functional areas with minimal impact on the existing areas.

The RMBB core uses the services of the process framework, CORBA framework and event management framework of the network manager.

A CORBA interface layer separates CORBA specific code from the rest of the application, for facilitating mitigation to other technologies in future, if desired. This interface layer includes a network element discovery/query interface, a equipment inventory query interface and a termination provisioning interface. The NE discovery/query interface operates to retrieve a snapshot of managed NEs and to monitor NE additions, deletions, and attribute changes. The equipment query interface operates to retrieve NE configuration data (i.e. shelf and circuit pack data), and the termination provisioning interface queries and sets the attributes of termination points which make up the facilities on a NE.

The RMBB also includes a MOA specific layer comprising a MOA configuration client, a facility provisioning interface components and a remote inventory library used for equipment inventory and termination provisioning.

A CORBA interface layer that separates CORBA specific code from the rest of the application. This facilitated mitigation to other technologies in future, if desired. This interface layer provides open, standard based CORBA interfaces such as an event and a protection control interfaces which are specific to each client.

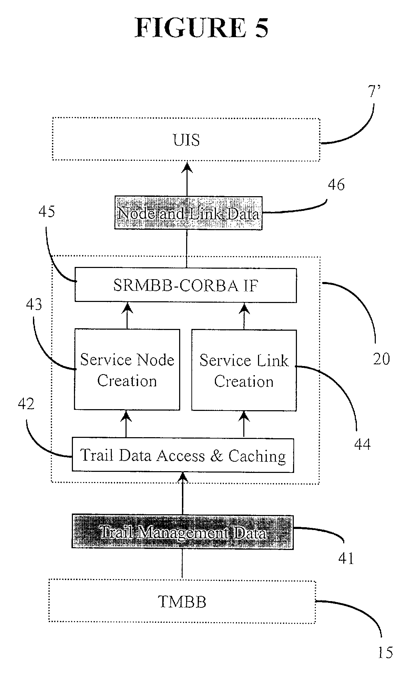

Figure 5 shows functional block diagram of the SRMBB 20. As indicated above, SRMBB supports the same interfaces as the physical implementation, RMBB, but generates service nodes known as service elements, and links abstracted from trail data instead of physical nodes and links from MOA interfaces.

A functional block **42** deals with communications with the TMBB 15 and caching trail management data **41**. The service node creation component **43** and service link creation component **44** use this trail data to generate appropriately named elements and links. SRMBB **20** converts trails into service resources

SRMBB-CORBA interface component **45** shares code with physical RMBB **15**, and manages the interface to client in the UIS **7'**, to provide UIS **7'** with and link service data **46**.

Fault management encompasses the functionality required to detect, isolate and correct network faults.

FMBB **16** is a processing layer BB including a CORBA interface layer that separates CORBA specific code from the rest of the application. This facilitated mitigation to other technologies in future, if desired. This interface layer provides open, standard based CORBA interfaces such as an event and a protection control interfaces which are specific to each client.

The event interface effects operations to retrieve a snapshot of the current active alarms in the system, or to monitor alarm/event activity on an ongoing basis. This includes protection status (protection switch reporting) events. Protection control interface operates to apply a forced, manual, or lockout protection switch for BLSR (bidirectional line switched ring), 1:N and 1+1 topologies, including protection loops and optical tribs where applicable.

The FMBB also includes a MOA specific layer, that handles MOA interaction. A MOA fault client in this layer establishes the necessary connections with supported MOAs using CORBA interfaces offered by the MOAs to retrieve fault notifications. A MOA PSC client of this layer forwards protection requests to the appropriate MOA.

The fault management core of the FMBB contains objects that handle the processing of requests from clients, and receiving information from the MOA dependent layer. This layer uses the services of the CORBA framework, process framework object management and event management.

In its current version, FMBB provides a single point of access to fault information in a network consisting of SONET and ATM nodes. This BB is location independent, and as such may be installed on any node. The execution of multiple FMBBs on a single workstation may also be supported by the network manager **1**.

As indicated above, the FMBB **16** and SFMBB **21** use same interfaces. Fault conditions may occur on any network resource. With regard to physical resources, alarm indications remain the same as in the known network management product. For service-oriented resources, similar principles apply. However, for service faults, it is desirable to identify whether the problem belongs in the provider's domain or the customer's domain.

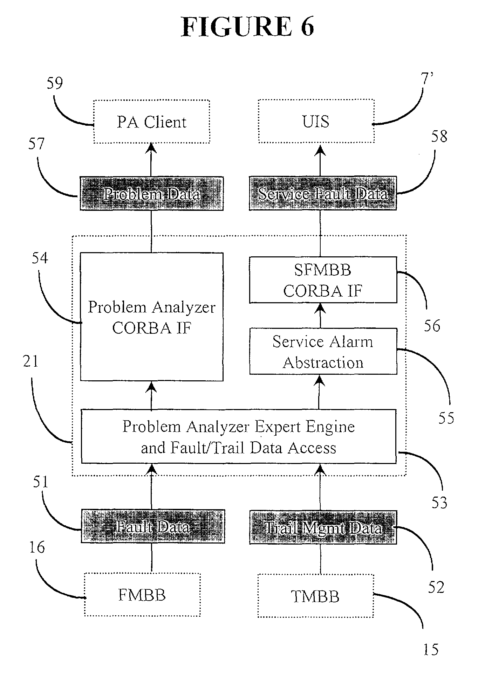

Figure 6 show a functional block diagram of the SFMBB **21**. SFMBB **21** supports the same interfaces as the physical implementation, FMBB **16**, but generates alarms to support the service elements and links generated by the SRMBB **20**. Service alarms are derived from any physical alarms that can be mapped into a service. These alarms are translated to make the alarm applicable to service management.

As shown in Figure 6, SFMBB **21** receives fault data **51** from FMBB **16** and trail management data **52** from TMBB **15**. A problem analizer **53** is responsible for acquiring and processing fault and trail data. This block also uses an extended set of expert system rules to determine the status of trails (up, down, troubled, protected, unprotected, etc.). The problem analyzer **53** also maps as many alarms as possible to trails and pass this information on to a service alarm abstraction component **55**.

Service alarm abstraction component **55** translates the alarms into service fault data **58** for use in the service layer. This involves removing any references to physical hardware, changing the wording of text to refer to services, and using service naming. The SFMBB CORBA interface **56**, largely consisting of code shared with FMBB, manages client access. i.e. access of UIS **7'**.

Problem analyzer (PA) CORBA interface **54** determines the type of faults and provides problem data **57** to PA client **59**, which is a user interface that also uses the PA expert system, but to find the root cause of several alarms rather than to determine the status of services.

Unfortunately, determination of the trail status based on the alarm data is technologically dependent. Therefore, it is necessary to develop separate SFMBBs for ATM, SONET and other technologies.

## Claims

1. A network management system for enabling control and monitoring of a plurality of physical resources forming a communication network, comprising:
a building block (BB) family including:
a building block (BB) specialized in collecting and processing resource information from said physical resources and generating specific physical data;
a service BB (SBB) for receiving said specific physical data and converting same into specific service data; and
a service and network management user interface shared by said BB family, for receiving said specific physical data from said BB and said specific service data form said SBB, and converting same into service and physical user data for presentation to a graphical user interface in a single view.

2. A network management system as claimed in claim 1, wherein each of said BB and SBB comprise;
BB specific software components;
BB family specific components, reused by said BB and said SBB; and
network management system software components, reused by said BB family and any other BB and SBB present in said network management system.

3. A network management system as claimed in claim 1, further comprising a server SBB for receiving and converting additional specific physical data, to additional specific service data and mapping same to said specific service data generated by said SBB.

4. A network management system for enabling control and monitoring of a plurality of physical resources forming a communication network, comprising:
a trail management building block (TMBB), specialized in collecting and processing information regarding connectivity between a plurality of physical nodes of said network and generating physical trail data;
a service resource management BB (SRMBB), for receiving said physical trail data and generating service resource data regarding a plurality of service nodes of said network and connectivity of services between said service nodes.

5. A network management system as claimed in claim 4, further comprising a resource management BB (RMBB), for collecting and processing information regarding location and configuration of said physical nodes and generating physical nodes data.

6. A network management system as claimed in claim 1, further comprising a fault management BB (FMBB), specialized in collecting and processing alarms raised within said network and generating physical faults data.

7. A network management system as claimed in claim 6, further comprising a service fault management BB (SFMBB) for receiving said physical fault data and said service and said service resource data and generating service fault data.

8. A network management system as claimed in claim 5, wherein said SRMBB and said RMBB form a family of BBs, and accordingly each comprises reuse software for processing of the respective physical trail data and service resource data.

9. A network management system as claimed in claim 4, wherein said SRMBB comprises:
a trail data access and caching block for receiving and processing said physical trail data from said TMBB;
a service node creation block for creating said service nodes from said physical trail data;
a service link creation block for creating said service trail data from said physical trail data; and
a BB family specific interface for exchanging said service node data and said service trail data with said service and network management user interface.

10. A network management system as claimed in claim 7, wherein said SFMBB comprises:
a problem analyzer for processing said physical fault data received from said FMBB and said physical trail data received from said TMBB generating problem data;
a service alarm abstraction for receiving said problem data, and generating said service fault data;
a problem analyzer interface for providing said problem data to a problem analyzer client; and
an service BB interface for providing said service fault data with said service and network management user interface.
